# EUROPEAN PATENT SPECIFICATION

(11) **EP 3 299 418 B1**
(45) Date of publication and mention of the grant of the patent: **29.01.2020**
(21) Application number: 16792861.3
(22) Date of filing: 18.04.2016
(51) Int. Cl.: C08L 71/10, C08L 81/02, C09J 171/10, C09J 181/02

(54) **POLYARYLENE SULFIDE COMPOSITION WITH EXCELLENT ADHESION TO METAL**
POLYARYLENSULFIDZUSAMMENSETZUNG MIT AUSGEZEICHNETER METALLHAFTUNG
COMPOSITION DE SULFURE DE POLYARYLÈNE PRÉSENTANT UNE EXCELLENTE ADHÉRENCE À UN MÉTAL

(30) Priority: 14.05.2015 KR 20150067402
(43) Date of publication of application: 28.03.2018
(73) Proprietor: Initz Co., Ltd., Nam-gu, Ulsan 44784 (KR)
(72) Inventor: AHN, Byung-Woo, Incheon 21910 (KR); SHIN, Jong-Wook, Suwon-si Gyeonggi-do 16316 (KR); OH, Hyeoung-Geun, Suwon-si Gyeonggi-do 16435 (KR); KIM, Hae Ri, Seongnam-si Gyeonggi-do 13504 (KR)
(74) Representative: dompatent von Kreisler Selting Werner - Partnerschaft von Patent- und Rechtsanwälten mbB
(86) International application number: PCT/KR2016/003999
(87) International publication number: WO 2016/182215

(56) References cited:
- EP-A2- 2 546 281
- CN-A- 103 305 003
- JP-A- 2005 536 597
- JP-A- 2015 066 735
- KR-A- 20110 102 226
- KR-A- 20150 014 432
- US-A1- 2003 060 552
- US-A1- 2012 252 962

## Description

### Technical Field

The present invention relates to a polyarylene sulfide composition having improved tensile strength, impact strength, and adhesion to metals, with a small amount of outgassing.

### Background Art

Currently, a demand for a polyarylene sulfide (PAS), a representative engineering plastic, has increased for applications in a variety of electronic goods and products used in high temperatures and corrosive environments due to its high thermal resistance, chemical resistance, flame resistance, and electric insulation.

Polyphenylene sulfide (PPS) is the only commercially available polyarylene sulfide. PPS is widely used for housing or major parts of automobile equipment and electric or electronic devices due to its excellent mechanical, electrical and thermal properties, and chemical resistance.

The primary process for commercially producing PPS is solution polymerization of p-dichlorobenzene (pDCB) and sodium sulfide in a polar organic solvent such as N-methyl pyrrolidone, which is known as the Macallum process.

When a polyarylene sulfide is produced by the Macallum process, however, the solution polymerization using sodium sulfide, etc., may produce by-products in a salt form (e.g., sodium chloride). Since such by-products in a salt form and any residual organic solvents impair the performance of electronic devices, they must be removed. Therefore, the solution polymerization has a disadvantage that additional washing or drying process is required. Further, a polyarylene sulfide produced by the Macallum process has a powder form, which may render the subsequent processes inconvenient and impair its workability (see US Patent Nos. 2,513,188 and 2,583,941).

To resolve the above problems, a process of manufacturing a polyarylene sulfide such as PPS by melt polymerization of reactants containing diiodide aromatic compounds and elemental sulfur has been suggested. As the process neither produces by-products in a salt form in the manufacture of a polyarylene sulfide nor uses organic solvents, it does not require any separate process for removing such by-products or organic solvents. Further, the finally obtained polyarylene sulfide has a pellet form, which may render the subsequent processes convenient and improve its workability.

Meanwhile, conventional PPS has a problem of poor adhesion to metals since a large amount of outgassing (i.e., oligomers of low molecular weights) is generated at the flow front in injection molding, which prevents micropores in the metal surface from being filled when the PPS adheres to metals. As an alternative for improving adhesion of PPS to metals, a resin composition prepared by compounding PPS with a polyolefin containing a polar group and a compatibilizing agent has been suggested. However, it has been found that use of such alloy or oligomer degrades the mechanical properties of PPS and weakens the thermal characteristics of PPS.

US 2003/060552 A1 discloses a corona resistant thermoplastic composition comprises about 15 to about 85 wt % of a thermoplastic resin comprising polyarylene ether and polyarylene sulfide; about 10 to about 30 wt % glass fibers; and about 5 to about 51 wt % of a mineral filler having an average radius of gyration effective to produce a corona resistance of greater than 200 hours when continuously subjected to a voltage of 5000 volts and wherein the weight percents are based on total composition.

US 2012/252962 A1 discloses thermoplastic molding materials comprising at least one polyarylene ether, at least one polyarylene sulfide, at least one functionalized polyarylene ether comprising carboxyl groups having a viscosity number according to DIN EN ISO 1628-1 of 45 to 65 ml/g measured in 1% strength by weight solution in N-methyl-2-pyrrolidone at 25° C., at least one fibrous or particulate filler and optionally further additives and/or processing assistants.

EP 2546281 A2 discloses polyarylene sulfide that may exhibit excellent processability at low temperature, decrease outgassing and flash or burr generation, and thus may satisfactorily mold a product requiring high molding accuracy.

Accordingly, it is required to develop a polyarylene sulfide composition having an excellent adhesive property to metals with a reduced amount of outgassing at the flow front, which is an underlying problem in the conventional metal adhesive plastics, and a reduced amount of by-products such as chloride.

The embodiment of the present invention is reflected in independent claim 1.

The preferred embodiments of the present invention are reflected in dependent claims 2 to 14.

### Disclosure of Invention

### Technical Problem

An object of the present invention is to provide a polyarylene sulfide composition having an excellent adhesive property to metals with a small amount of outgassing at the flow front.

### Solution to Problem

The present invention provides a resin composition comprising a polyarylene sulfide; and a phenoxy resin of Formula 1, wherein the amount of outgassing is 300 ppm or less: 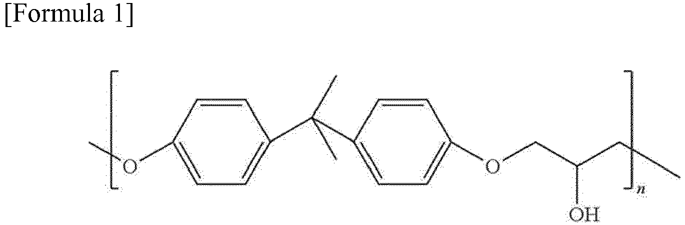 wherein n is an integer of 100 to 900.

### Advantageous Effects of Invention

The resin composition according to the present invention has an excellent adhesive property to metals, without compromising excellent mechanical and thermal properties unique to PPS, with a small amount of outgassing. Therefore, it can be used in a variety of applications including electronic parts and automobile parts to be integrally formed by injection insert molding. Further, the resin composition of the present invention may be useful as materials for internal parts to be employed in such electronic devices as cellular phones, notebook computers, etc., since it contains a small amount of by-products in a salt form, which may otherwise impair the performance of the electronic devices.

### Brief Description of Drawings

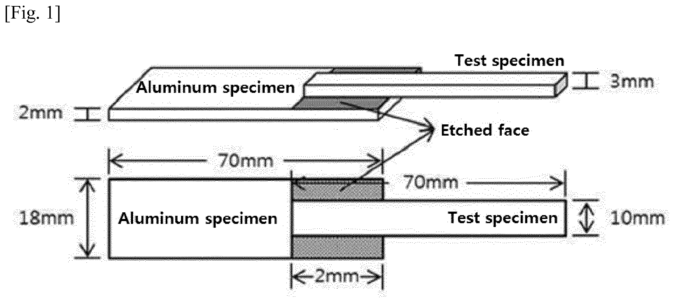

Fig. 1 is a partial schematic diagram showing a process of preparing a specimen for testing adhesive strength to metals using the resin composition of the present invention.

### Best Mode for Carrying out the Invention

The present invention provides a resin composition comprising a polyarylene sulfide; and a phenoxy resin of Formula 1, wherein the amount of outgassing is 300 ppm or less: 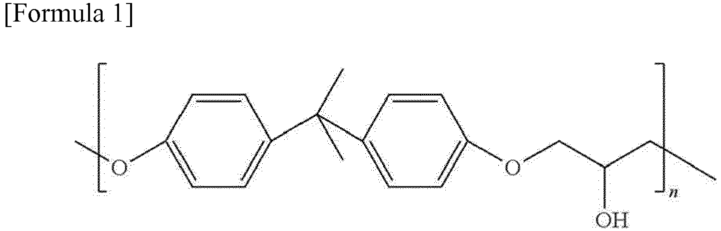 wherein n is an integer of 100 to 900.

The resin composition according to the present invention is characterized in that the amount of outgassing is 300 ppm or less, specifically 150 to 300 ppm.

In the resin composition according to the present invention, the amount of chloride is 300 ppm or less, 200 ppm or less, or 100 ppm or less, specifically 0 to 100 ppm, more specifically 60 ppm or less.

Hereinafter, the components of the present composition are described in detail.

The resin composition of the present invention comprises a polyarylene sulfide.

The polyarylene sulfide may be comprised in an amount of 20 to 85% by weight, preferably 30 to 80% by weight, based on the total amount of the composition. When the amount of the polyarylene sulfide is 20% by weight or higher, the mechanical strength such as tensile strength does not decrease. Further, when the amount is 85% by weight or lower, the adhesive effect to metals becomes excellent.

The polyarylene sulfide may comprise an arylene sulfide repeating unit and an arylene disulfide repeating unit, and the weight ratio of arylene sulfide repeating unit to arylene disulfide repeating unit ranges from 1:0.0001 to 1:0.5.

The arylene sulfide repeating unit may be comprised in an amount of 95 to 99.99% by weight based on the total weight of polyarylene sulfide, and the arylene disulfide repeating unit may be comprised in an amount of 0.01 to 5% by weight based on the total weight of polyarylene sulfide.

The polyarylene sulfide may have a number average molecular weight of 3,000 to 1,000,000, and a polydispersity, defined as a ratio of weight average molecular weight to number average molecular weight, of 2.0 to 4.0, which indicates a relatively narrow dispersion.

The polyarylene sulfide may have a melting point ranging from 270 to 290°C, specifically from 275 to 285°C, more specifically about 280°C. Further, the melt viscosity as measured by a rotational disk-type viscometer at a temperature of melting point + 20°C may range from 100 to 5,000 poises, specifically from 500 to 3,000 poises, more specifically about 2,000 poises.

Since the polyarylene sulfide used in the present invention comprises a certain amount of an arylene disulfide repeating unit, it may have a lower melting point than that of a polyarylene sulfide having the same molecular weight but consisting of an arylene sulfide repeating unit only, which lowers the processing temperature and reduces the amount of outgassing generated as by-products in the molding process. Further, the polyarylene sulfide finally produced has excellent physical properties.

The polyarylene sulfide is not specifically limited as long as it satisfies the properties discussed above. For instance, the polyarylene sulfide may be produced by solution polymerization. Further, the polyarylene sulfide that satisfies the properties discussed above improves adhesion of a resin composition to metals.

Specifically, the polyarylene sulfide may be produced by the method disclosed in Korea Patent Laid-open Publication No. 2011-0102226, which may comprise the steps of, for example, (a) carrying out a polymerization reaction of reactants comprising a diiodide aromatic compound and a sulfur compound; and (b) during the polymerization reaction, further adding a sulfur compound in an amount of 0.1 to 20 parts by weight based on 100 parts by weight of the sulfur compound contained in the reactants.

Since a small amount of a sulfur compound is further added during the polymerization reaction in the above-mentioned method, disulfide-type bonds may be formed in the polymer. The disulfide-type bonds continuously participate in a sulfur exchange reaction, a type of equilibrium reaction, with the polymer chains contained in the polyarylene sulfide, thereby rendering uniform the molecular weights of the polymer chains contained in the polyarylene sulfide. Especially, the degree of polymerization of the reactants may be generally uniform due to the equilibrium reaction of sulfur exchange reaction; therefore, the formation of polyarylene sulfide polymer chains having excessively large or small molecular weights may be suppressed.

The reactants comprising a diiodide aromatic compound and a sulfur compound may be melt blended before the polymerization step. The diiodide aromatic compound may be used in an amount of 1,000 to 1,400 parts by weight based on 100 parts by weight of the sulfur compound supplied before the polymerization.

In step (a), 1 to 20 parts by weight of a polymerization terminator may be added based on 100 parts by weight of the sulfur compound supplied to the reactants. The polymerization terminator is not specifically limited as long as it can terminate the polymerization by removing the iodine groups contained in the polymer to be prepared. As the polymerization terminator, at least one selected from the group consisting of diphenyl sulfide, diphenyl ether, biphenyl (or diphenyl), benzophenone, dibenzothiazyl disulfide, monoiodoaryl compounds, benzothiazoles, benzothiazole sulfenamides, thiurams, dithiocarbamates, and diphenyl disulfide may be used.

The diiodide aromatic compounds, which may be used in the polymerization reaction of a polyarylene sulfide, are at least one selected from the group consisting of diiodobenzene (DIB), diiodonaphthalene, diiodobiphenyl, diiodobisphenol, and diiodobenzophenone, but are not limited thereto.

The conditions for step (a) are not specifically limited as long as the reaction of the diiodide aromatic compounds with the sulfur compounds may be initiated. Specifically, the polymerization may be performed in reaction conditions of elevated temperatures and reduced pressures. Specifically, the temperature is elevated and the pressure is reduced from an initial reaction condition of a temperature of 180 to 250°C and a pressure of 50 to 450 torr to a final reaction condition of a temperature of 270 to 350°C and a pressure of 0.001 to 20 torr. The reaction may be performed for 1 to 30 hours.

The polyarylene sulfide used in the present invention rarely contains by-products in a salt form, unlike the polyarylene sulfides produced by the conventional solution polymerization method. The resin composition of the present invention may comprise chloride in an amount of 300 ppm or less, 200 ppm or less, or 100 ppm or less, specifically 0 to 100 ppm, more specifically 60 ppm or less.

Meanwhile, the resin composition of the present invention comprises a phenoxy resin.

The phenoxy resin may be a BPA-type phenoxy resin comprising bisphenol A (BPA) and represented by, for example, the following Formula 1. 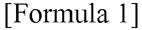 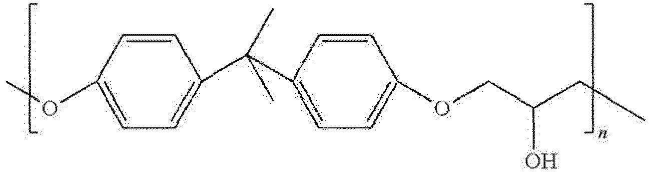 wherein n is an integer of 100 to 900. Specifically, n is an integer of 100 to 900, 100 to 700, 100 to 500, 100 to 300, 200 to 700, 200 to 300, or 300 to 500.

The phenoxy resin may be comprised in an amount of 0.5 to 10% by weight, specifically 1 to 8%, or 5 to 8% by weight, based on the total amount of the composition. When the amount of the phenoxy resin is 0.5% by weight or higher, the adhesive strength to metals becomes excellent. Further, when the amount is 10% by weight or lower, the mechanical strength is not impaired.

The phenoxy resin may have a number average molecular weight of 10,000 to 250,000, specifically 20,000 to 220,000, and a glass transition temperature of 50 to 130°C, specifically 60 to 120°C.

Furthermore, the phenoxy resin repeating unit may contain a hydroxyl or epoxy radical in its terminal.

According to the present invention, the addition of the phenoxy resin may impart an excellent adhesive property to metals to the resin composition that the conventional PPS resin composition could not have.

The resin composition of the present invention may further comprise a component selected from the group consisting of an elastomer, a filler, a shock absorber, an adhesiveness enhancer, a stabilizer, a pigment, and combinations thereof.

As the elastomer, a thermoplastic elastomer selected from the group consisting of polyvinyl chloride elastomers, polyolefin elastomers, polyurethane elastomers, polyester elastomers, polyamide elastomers, polybutadiene elastomers, a terpolymer of glycidyl methacrylate and methyl acryl ester, and combinations thereof may be used. A preferable elastomer is a terpolymer of glycidyl methacrylate and methyl acryl ester.

The elastomer may be comprised in an amount of 1 to 15% by weight, preferably 3 to 10% by weight, based on the total amount of the resin composition. The addition of the elastomer to the resin composition of the present invention may impart toughness to PPS, which prevents interfacial separation between the resin and the metal that may otherwise be caused by changes in temperature after adhesion to the metal.

As the filler, at least one organic or inorganic filler selected from the group consisting of a glass fiber, a carbon fiber, a boron fiber, a glass bead, a glass flake, talc, and calcium carbonate may be used. A preferable filler is a glass fiber. The filler may be in the form of powder or flake, but is not limited thereto.

The glass fiber used as the filler may be selected from the group consisting of an epoxy silane treated glass fiber, an amino silane treated glass fiber, and combinations thereof. Specifically, the glass fiber may be treated with an epoxy silane.

The filler may be comprised in an amount of 5 to 50% by weight, specifically 10 to 40% by weight, based on the total amount of the resin composition.

As the pigment, conventional organic or inorganic pigments known in the art, for example, an organic or inorganic pigment selected from the group consisting of titanium dioxide (TiO₂), carbon black, and combinations thereof may be used. Preferably, titanium dioxide may be used.

The pigment may be comprised in an amount of 0.1 to 10% by weight, preferably 0.3 to 7% by weight, based on the total amount of the composition.

The shock absorber, adhesiveness enhancer, and stabilizer may be conventional ones used in the art.

The stabilizer may be an antioxidant, a photostabilizer, a UV stabilizer, and a combination thereof.

An example of the antioxidant may be phenolic antioxidants, amine antioxidants, sulfur antioxidants, or phosphorus antioxidants. Antioxidants serve to sustain high heat resistance and thermal stability of the resin composition according to the present invention.

As the phenolic antioxidants, hindered phenol compounds are preferably used. Specific examples are tetrakis[methylene-3-(3,5-di-tert-butyl-4-hydroxyphenyl)propionate] methane, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], and so on.

Examples of the phosphorus antioxidants are tris(2,4-di-tert-butylphenyl)phosphate, O,O'-dioctadecylpentaerythritol bis(phosphite), bis(2,4-di-tert-butylphenyl)pentaerythritol diphosphite, 3,9-bis(2,4-di-tert-butylphenoxy)-2,4,8,10-tetraoxa-3,9-diphospaspiro[5.5]undecane, and so on.

Besides the above components, the resin composition of the present invention may further comprise various conventional additives known in the art such as a plasticizer, a nucleating agent, and so on.

Further, the resin composition according to the present invention may comprise various lubricants for enhancing moldability. Especially, hydrocarbon lubricants may be used to prevent friction between the resin and the mold metal and to confer releasability from the mold, etc.

The resin composition of the present invention may have a tensile strength of 50 MPa or higher, 80 MPa or higher, 50 to 160 MPa, or 80 to 150 MPa, as measured according to ASTM D 638.

The resin composition of the present invention may have an adhesive strength to metals of 25 MPa or higher, 30 MPa or higher, 40 MPa or higher, 25 to 75 MPa, or 40 to 75 MPa, as measured according to ASTM D 3163 for a metal adhesive test specimen obtained by insert injection on to an aluminum plate etched in a certain pattern.

The resin composition of the present invention may have an impact strength of 6.5 KJ/m² or higher, 7 KJ/m² or higher, 6.5 to 9 KJ/m², or 7 to 9 KJ/m², as measured according to ISO 179.

Thus, as the resin composition of the present invention comprises the polyarylene sulfide and the phenoxy resin discussed above, it may have an excellent adhesive property to metals, without compromising excellent mechanical and thermal properties unique to polyarylene sulfides, with a small amount of outgassing.

Further, the present invention provides molded articles manufactured from the present resin composition.

The resin composition of the present invention may be used according to known methods in the art, such as biaxial extrusion, to manufacture molded articles, which have excellent adhesiveness to metals and may be used in a variety of applications.

The molded articles may be in various forms including films, sheets, or fibers according to the present invention. The molded articles may be injection molded articles, extrusion molded articles, or blow molded articles. In case of injection molding, the temperature of the mold may be about 130°C or higher in light of crystallization.

In case that the molded articles are in film or sheet forms, they may be manufactured as various films or sheets such as non-oriented, uniaxially oriented, or biaxially oriented films or sheets. The molded articles may be used as a non-oriented fiber, a drawn fiber, or an ultra-drawn fiber, etc., and also used as a fabric, knitted goods, a non-woven fabric (spunbond, meltblow, or staple), a rope, or a net.

The above molded articles may be used as electric/electronic parts, building materials, automobile parts, machine parts, or basic commodities, as well as coatings of an area contacted with chemicals or an industrial fiber with chemical resistance.

### Mode for the Invention

Hereinafter, the present invention is explained in detail by Examples. The following Examples are intended to further illustrate the present invention without limiting its scope.

### Preparation Example 1: Preparation of PPS

40 kg of p-diiodobenzene, 3.4 kg of sulfur, and 150 g of 1,3-diiodo-4-nitrobenzene as a catalyst were melt blended at 180°C in a reactor. The mixed reactants were subjected to a polymerization reaction while the temperature was raised from 180°C to 340°C and the pressure was reduced from 350 torr to 10 torr. At the time of 5 hours after the initiation of polymerization, 150 g of sulfur and 100 g of diphenyl sulfide as a polymerization terminator were added to the reaction mixture, and the polymerization reaction was performed for additional 3 hours to obtain a polymer.

Melt viscosity (MV), melting point (Tm), and weight ratio of the repeating units of the resulting PPS polymer were measured according to the following methods. As a result, the PPS polymer had an MV of 2,000 poise, a Tm of 280°C, a number average molecular weight of 16,400, and a weight ratio of arylene sulfide unit to arylene disulfide unit of 1:0.003.

### Melt viscosity

Melt viscosity was measured at Tm+20°C by a rotating disk viscometer. In the frequency sweep method, the angular frequency was measured from 0.6 to 500 rad/s, and the viscosity at 1.0 rad/s was defined as melt viscosity.

### Melting point

Using a differential scanning calorimeter (DSC), the melting point was measured while the temperature was raised from 30 to 320°C at a speed of 10°C /minute, cooled to 30°C, and then raised from 30 to 320°C at a speed of 10°C /minute.

### Weight analysis of repeating units

2 mg of the produced PPS polymer were combusted at 1,000°C in an Automatic Quick Furnace. Sulfur gas was entrapped in an absorbing solution (e.g., hydrogen peroxide) and ionized. The sulfur ions were separated in a column of ion chromatography, and their amounts were measured by a standard material (K₂SO₄) for sulfur. The difference between the measured sulfur amount and the theoretical sulfur amount was calculated as the amount of arylene disulfide.

### Example 1: Preparation of PPS resin compositions

67% by weight of the PPS resin obtained in Preparation Example 1, 15% by weight of a glass fiber treated with an epoxy silane (OCV-910, Owens Corning), 8% by weight of an elastomer (Lotader AX-8900, Arkema), 5% by weight of a phenoxy resin (YP-50, Kukdo Chemical Co., Ltd.), and 5% by weight of a white pigment TiO₂ (2233 grade, Kronoss) were fed to a biaxial screw extruder to prepare a composition.

The extruder had a diameter of 40 mm and an L/D of 44 (SM Platek). The extrusion conditions were a screw speed of 250 rpm, a feed rate of 60 kg/hour, a barrel temperature of 280 to 300°C, and a torque of 60%. The above materials were fed through a total of three feeders, in which the first feeder was used to feed the PPS resin, elastomer, and phenoxy resin; the second feeder to feed the white pigment; and a third feeder to feed the glass fiber.

### Examples 2 to 7

The same procedures as in Example 1 were repeated to prepare PPS resin compositions, except that the components and their amounts were as described in table 2 below.

### Comparative Example 1

The same procedures as in Example 1 were repeated to prepare a PPS resin composition, except that a BPA-type epoxy resin (YD-017, Kukdo Chemical Co., Ltd.) was used instead of the phenoxy resin.

### Comparative Example 2

The same procedures as in Example 1 were repeated to prepare a PPS resin composition, except that components and their amounts were as described in table 2 below.

### Comparative Example 3

The same procedures as in Example 1 were repeated to prepare a PPS resin composition, except that the components and their amounts were as described in table 2 below and no phenoxy resin was used.

### Comparative Example 4

The same procedures as in Example 1 were repeated to prepare a PPS resin composition, except that PPS 1 (0205P4, Ticona, a linear type PPS) prepared by a solution polymerization method instead of that obtained in Preparation Example 1 was used.

### Comparative Example 5

The same procedures as in Example 1 were repeated to prepare a PPS resin composition, except that the components and their amounts were as described in table 2 below, PPS 1 (0205P4, Ticona, a linear type PPS) prepared by a solution polymerization method instead of that obtained in Preparation Example 1 was used, and no phenoxy resin was used.

### Comparative Example 6

The same procedures as in Example 1 were repeated to prepare a PPS resin composition, except that PPS 2 (P6, Chevron Philips, a cross-over type PPS) prepared by a solution polymerization method instead of that obtained in Preparation Example 1 was used.

Table 1 below shows the manufacturers of the components used in Examples 1 to 7 and Comparative Examples 1 to 6.

**Table 1**

| | **Components** | **Grades** | **Manufacturers** |
|---|---|---|---|
| A | PPS obtained in Preparation Example 1 | - | - |
| B | PPS 1 prepared by solution polymerization | 0205P4 | Ticona |
| C | PPS 2 prepared by solution polymerization | P6 | Chevron Philips (CPC) |
| D-1 | Phenoxy resin (BPA-type) | PKHH | InChem |
| D-2 | Phenoxy resin (BPA-type) | YP-50 | Kukdo Chemical Co., Ltd. |
| E | Epoxy resin (BPA-type) | YD-017 | Kukdo Chemical Co., Ltd. |
| F-1 | Urethane/epoxy silane-treated glass fiber | TF-523 | Owens corning |
| F-2 | Urethane/amino silane-treated glass fiber | OCV-910 | Owens corning |
| G | White pigment (TiO₂) | 2233 | Kronoss |
| H | Elastomer | Lotader AX-8900 | Arkema |

The phenoxy resin (D-2) had a number average molecular weight of 50,000 to 60,000 and a glass transition temperature of 74 to 80°C.

### Test Examples

Physical properties of the PPS resin compositions prepared in Examples and Comparative Examples were tested as described below. The results are shown in Table 2.

First, the PPS resin compositions prepared in Examples and Comparative Examples were injected at 310°C to prepare injection molded specimens.

### (1) Amount of outgassing

2 g of the injection molded specimen were placed in 20 mL sealed vial. After the vial was heated at 260°C for 30 minutes in a Head Space equipment, the generated gas was automatically transported to a gas chromatography-mass spectrometer. Then, each component was separated with a capillary column for qualitative analysis, and the amount of each component in the specimen was quantitatively analyzed with benzothiazole as a standard material.

### (2) Tensile strength

Tensile strength of the injection molded specimen was measured according to ASTM D 638 method.

### (3) Impact strength (notch)

According to ISO 179 method, the impact strength of an injection-molded test specimen (80 mm (length) × 10 mm (width) × 4 mm (thickness)) was measured by the V-notch Charpy method.

### (4) Adhesive strength to metals

An aluminum specimen (length: 70 mm, width: 18 mm, and height: 2 mm) specifically etched was placed between a fixed mold and a mobile mold in a 2-plate injection molding machine. The PPS resin compositions prepared in Examples and Comparative Examples were each inserted between the 2-plate molds and injection molded at an injection speed of 50 mm/s, an injection pressure of 120 MPa, and a mold temperature of 150°C in a 80 ton Engel injection machine. The molded parts were released from the mold to prepare test specimens (length: 70 mm, width: 10 mm, and height: 3 mm) for measuring adhesive strength to metals (see Fig. 1). The adhesive strength to metals of the test specimens was measured according to ASTM D 3163 method.

### (5) Chloride content

Resins used as materials for internal parts to be employed in such electronic devices as cellular phones, notebook computers, etc., should have a low level of chloride by-products in order to prevent the performance of the electronic devices from being impaired. Accordingly, the chloride content was measured for the PPS resin prepared in Preparation Example 1 and PPS 1 and PPS 2 resins prepared by the solution polymerization method, as follows.

Specifically, 50 mg of a resin specimen were heated at about 1,000°C to incinerate any organic materials, entrapped in a halogen or sulfur absorbing solution, and then analyzed by ion chromatography (Ion Chromatography, Auto Quick Furnace).

As a result, the chloride content of the PPS resin prepared in Preparation Example 1 was 0 ppm, while those of PPS 1 and PPS 2 resins prepared by the solution polymerization method were 1,300 ppm and 2,300 ppm, respectively. The results show that the PPS resin prepared in Preparation Example 1 has a remarkably low amount of impurities.

For the resin compositions prepared in Examples 1 to 7 and Comparative Examples 1 to 6, the chloride contents were measured according to the same procedures as above. The results are shown in Table 2.

**Table 2**

| **Components (% by weight)** | | **Examples** | | | | | | | **Comparative Examples** | | | | | |
|---|---|---|---|---|---|---|---|---|---|---|---|---|---|---|
| | | 1 | 2 | 3 | 4 | 5 | 6 | 7 | 1 | 2 | 3 | 4 | 5 | 6 |
| PPS | A | 67 | 62 | 52 | 42 | 59 | 59 | 67 | 67 | 60 | 72 | - | - | - |
| | B | - | - | - | - | - | - | - | - | - | - | 67 | 72 | - |
| | C | - | - | - | - | - | - | - | - | - | - | - | - | 67 |
| Phenoxy resin | D-1 | 5 | 5 | 5 | 5 | 8 | 8 | - | - | 12 | - | 5 | - | 5 |
| | D-2 | - | - | - | - | - | - | 5 | - | - | - | - | - | - |
| Epoxy resin | E | - | - | - | - | - | - | - | 5 | - | - | - | - | - |
| Glass fiber | F-1 | 15 | 20 | 30 | 40 | 20 | - | 15 | 15 | 15 | 15 | 15 | 15 | 15 |
| | F-2 | - | - | - | - | - | 20 | - | - | - | - | - | - | - |
| White pigment | G | 5 | 5 | 5 | 5 | 5 | 5 | 5 | 5 | 5 | 5 | 5 | 5 | 5 |
| Elastomer | H | 8 | 8 | 8 | 8 | 8 | 8 | 8 | 8 | 8 | 8 | 8 | 8 | 8 |
| Physical Property | Amount of outgassing (ppm) | 286 | 285 | 234 | 195 | 290 | 293 | 290 | 304 | 270 | 281 | 615 | 688 | 1240 |
| | Cl content (ppm) | 30 | 32 | 30 | 31 | 51 | 49 | 37 | 75 | 78 | 0 | 885 | 938 | 1531 |
| | Tensile strength (MPa) | 92 | 107 | 123 | 140 | 89 | 87 | 94 | 82 | 66 | 109 | 93 | 112 | 89 |
| | Impact strength (notch) (KJ/m²) | 8.1 | 8.2 | 8.5 | 8.7 | 8.3 | 8.2 | 7.9 | 5.7 | 6.2 | 7.8 | 7.2 | 7.5 | 6.8 |
| | Adhesive strength to metals (MPa) | 63 | 63 | 56 | 49 | 70 | 64 | 61 | 29 | 70 | 13 | 26 | 13 | 15 |

As shown in Table 2, the resin compositions according to the present invention produce an effect of reducing the amount of outgassing by 3 to 7.5 times compared with those of Comparative Examples 4 to 6 containing PPS 1 or PPS 2 produced by solution polymerization. Further, the present resin compositions containing a phenoxy resin have adhesive strengths to metals of 49 to 70 MPa, which are greatly improved over that of Comparative Example 1 containing a BPA epoxy resin. It is also noted that the composition of Comparative Example 2 containing an excessive amount of a phenoxy resin has decreased tensile strength, while that of Comparative Example 3 containing no phenoxy resin has greatly decreased tensile strength.

Meanwhile, the resin composition of the present invention has an impact strength of 7.9 to 8.7 KJ/m², thereby showing superior performance to those prepared in Comparative Examples 1 to 3, which contain an epoxy resin, contain no phenoxy resin, or contain an excess of a phenoxy resin. In addition, it is noted that the resin composition containing PPS prepared by the solution polymerization method instead of the PPS resin prepared in Preparation Example 1, although it contains a phenoxy resin, has low adhesive strength to metals.

Further, the resin compositions of Examples 1 to 7 have a low chloride content of 30 to 51 ppm, while those of Comparative Examples 4 and 5 containing PPS1 prepared by solution polymerization have a chloride content of 885 to 938 ppm, and that of Comparative Example 6 containing PPS2 prepared by solution polymerization has a chloride content of 1531 ppm, which indicates that the amounts of impurities would be different as much as fifty times. It is also noted that the resin compositions of Examples have a low chloride content compared with those of Comparative Examples 1 and 2 containing an epoxy resin instead of a phenoxy resin or containing an excess of a phenoxy resin, although they contain the PPS prepared in Preparation Example.

Consequently, the resin composition according to the present invention may have excellent adhesiveness to metals, tensile strength, and impact strength, with a reduced amount of outgassing. Therefore, it may be used in various fields including cellular phones, electronic parts, automobile parts, etc., to be integrally formed by injection insert molding. Further, the resin composition according to the present invention may contribute to superior performance of electronic devices due to its low level of impurities.

## Claims

1. A resin composition comprising a polyarylene sulfide; and a phenoxy resin of Formula 1, wherein the amount of outgassing is 300 ppm or less: 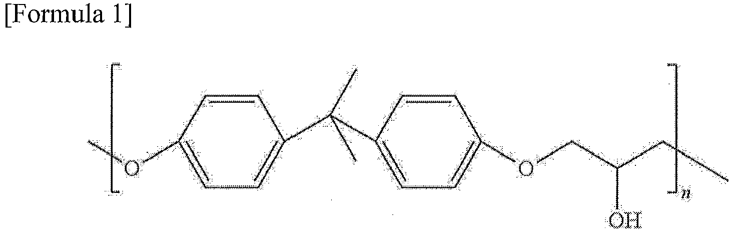 wherein n is an integer of 100 to 900.

2. The composition of claim 1, wherein the phenoxy resin is comprised in an amount of 0.5 to 10% by weight based on the total amount of the composition.

3. The composition of claim 1, further comprising a component selected from the group consisting of an elastomer, a filler, a shock absorber, an adhesiveness enhancer, a stabilizer, a pigment, and combinations thereof.

4. The composition of claim 3, wherein the elastomer is a thermoplastic elastomer selected from the group consisting of polyvinyl chloride elastomers, polyolefin elastomers, polyurethane elastomers, polyester elastomers, polyamide elastomers, polybutadiene elastomers, a terpolymer of glycidyl methacrylate and methyl acryl ester, and combinations thereof.

5. The composition of claim 3, wherein the filler is at least one organic or inorganic filler selected from the group consisting of a glass fiber, a carbon fiber, a boron fiber, a glass bead, a glass flake, talc and calcium carbonate.

6. The composition of claim 5, wherein the glass fiber is selected from the group consisting of an epoxy silane treated glass fiber, an amino silane treated glass fiber, and combinations thereof.

7. The composition of claim 3, wherein the pigment is an organic or inorganic pigment selected from the group consisting of titanium dioxide (TiO₂), carbon black, and combinations thereof.

8. The composition of claim 3, wherein the pigment is comprised in an amount of 0.1 to 10% by weight based on the total amount of the composition.

9. The composition of claim 1, wherein the composition has a tensile strength of 50 to 160 MPa as measured according to ASTM D 638.

10. The composition of claim 1, wherein the composition has an adhesive strength to metals of 25 to 75 MPa as measured according to ASTM D 3163.

11. The composition of claim 1, wherein the composition has an impact strength of 6.5 to 9 KJ/m² as measured according to ISO 179.

12. The composition of claim 1, wherein the composition has a chloride content of 300 ppm or less.

13. The composition of claim 12, wherein the composition has a chloride content of 100 ppm or less.

14. The composition of claim 1, wherein the polyarylene sulfide has a weight ratio of arylene sulfide repeating unit to arylene disulfide repeating unit ranging from 1:0.0001 to 1:0.5.

## Patentansprüche

1. Harzzusammensetzung, umfassend ein Polyarylensulfid und ein Phenoxyharz der Formel 1, wobei die Menge der Ausgasung 300 ppm oder weniger beträgt: 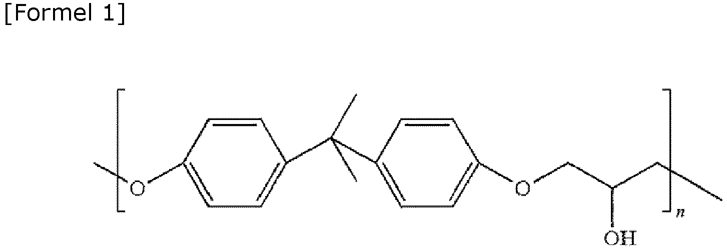 wobei n eine ganze Zahl von 100 bis 900 ist.

2. Zusammensetzung gemäß Anspruch 1, wobei das Phenoxyharz in einer Menge von 0,5 bis 10 Gew.-% vorhanden ist, bezogen auf die Gesamtmenge der Zusammensetzung.

3. Zusammensetzung gemäß Anspruch 1, weiterhin umfassend eine Komponente, die aus der Gruppe ausgewählt ist, die aus einem Elastomer, Füllstoff, Stoßdämpfer, Haftungsverstärker, Stabilisator, Pigment und Kombinationen davon besteht.

4. Zusammensetzung gemäß Anspruch 3, wobei das Elastomer ein thermoplastisches Elastomer ist, das aus der Gruppe ausgewählt ist, die aus Polyvinylchlorid-Elastomeren, Polyolefin-Elastomeren, Polyurethan-Elastomeren, Polyester-Elastomeren, Polyamid-Elastomeren, Polybutadien-Elastomeren, einem Terpolymer von Glycidylmethacrylat und Methylacrylester und Kombinationen davon besteht.

5. Zusammensetzung gemäß Anspruch 3, wobei der Füllstoff wenigstens ein organischer oder anorganischer Füllstoff ist, der aus der Gruppe ausgewählt ist, die aus einer Glasfaser, einer Kohlenstofffaser, einer Borfaser, einem Glaskügelchen, einer Glasflocke, Talk und Calciumcarbonat besteht.

6. Zusammensetzung gemäß Anspruch 5, wobei die Glasfaser aus der Gruppe ausgewählt ist, die aus einer Epoxysilan-behandelten Glasfaser, einer Aminosilan-behandelten Glasfaser und Kombinationen davon besteht.

7. Zusammensetzung gemäß Anspruch 3, wobei das Pigment ein organisches oder anorganisches Pigment ist, das aus der Gruppe ausgewählt ist, die aus Titandioxid (TiO₂), Ruß und Kombinationen davon besteht.

8. Zusammensetzung gemäß Anspruch 3, wobei das Pigment in einer Menge von 0,1 bis 10 Gew.-% vorhanden ist, bezogen auf die Gesamtmenge der Zusammensetzung.

9. Zusammensetzung gemäß Anspruch 1, wobei die Zusammensetzung eine gemäß ASTM D 638 gemessene Zugfestigkeit von 50 bis 160 MPa aufweist.

10. Zusammensetzung gemäß Anspruch 1, wobei die Zusammensetzung eine gemäß ASTM D 3163 gemessene Haftfestigkeit an Metallen von 25 bis 75 MPa aufweist.

11. Zusammensetzung gemäß Anspruch 1, wobei die Zusammensetzung eine gemäß ISO 179 gemessene Schlagzähigkeit von 6,5 bis 9 kJ/m² aufweist.

12. Zusammensetzung gemäß Anspruch 1, wobei die Zusammensetzung einen Chloridgehalt von 300 ppm oder weniger aufweist.

13. Zusammensetzung gemäß Anspruch 12, wobei die Zusammensetzung einen Chloridgehalt von 100 ppm oder weniger aufweist.

14. Zusammensetzung gemäß Anspruch 1, wobei das Polyarylensulfid ein Gewichtsverhältnis von Arylensulfid-Repetiereinheit zu Arylendisulfid-Repetiereinheit im Bereich von 1:0,0001 bis 1:0,5 aufweist.

## Revendications

1. Composition de résine, comprenant un sulfure de polyarylène, et une résine phénoxy répondant à la formule 1, dans laquelle la quantité de dégazage est 300 ppm ou moins : 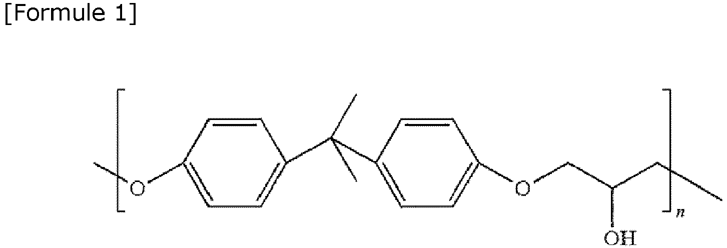 où n est un nombre entier valant de 100 à 900.

2. Composition selon la revendication 1, dans laquelle ladite résine phénoxy est présente en une quantité de 0,5 à 10 % en poids, par rapport à la quantité totale de la composition.

3. Composition selon la revendication 1, comprenant en outre un composant choisi dans le groupe consistant en un élastomère, une charge, un amortisseur, un exhausteur d'adhésivité, un stabilisateur, un pigment, et des combinaisons de ceux-ci.

4. Composition selon la revendication 3, dans laquelle ledit élastomère est un élastomère thermoplastique choisi dans le groupe consistant en des élastomères de chlorure de polyvinyle, des élastomères de polyoléfine, des élastomères de polyuréthane, des élastomères de polyester, des élastomères de polyamide, des élastomères de polybutadiène, un terpolymère de méthacrylate de glycidyle et d'acrylate de méthyle, et des combinaisons de ceux-ci.

5. Composition selon la revendication 3, dans laquelle ladite charge est au moins une charge organique ou inorganique choisie dans le groupe consistant en une fibre de verre, une fibre de carbone, une fibre de bore, une bille de verre, une écaille de verre, du talc, et du carbonate de calcium.

6. Composition selon la revendication 5, dans laquelle ladite fibre de verre est choisie dans le groupe consistant en une fibre de verre traitée à l'époxysilane, une fibre de verre traitée à l'aminosilane, et des combinaisons de celles-ci.

7. Composition selon la revendication 3, dans laquelle ledit pigment est un pigment organique ou inorganique choisi dans le groupe consistant en dioxyde de titane (TiO₂), du noir de carbone, et des combinaisons de ceux-ci.

8. Composition selon la revendication 3, dans laquelle ledit pigment est présent en une quantité de 0,1 à 10 % en poids, par rapport à la quantité totale de la composition.

9. Composition selon la revendication 1, dans laquelle la composition présente une résistance à la traction de 50 à 160 MPa, mesurée selon la norme ASTM D 638.

10. Composition selon la revendication 1, dans laquelle la composition présente un pouvoir adhésif aux métaux de 25 à 75 MPa, mesuré selon la norme ASTM D 3163.

11. Composition selon la revendication 1, dans laquelle la composition présente une résistance au choc de 6,5 à 9 kJ/m², mesurée selon la norme ISO 179.

12. Composition selon la revendication 1, dans laquelle la composition présente une teneur en chlorure de 300 ppm ou moins.

13. Composition selon la revendication 12, dans laquelle la composition présente une teneur en chlorure de 100 ppm ou moins.

14. Composition selon la revendication 1, dans laquelle ledit sulfure de polyarylène présente un rapport de poids de motifs répétitifs sulfure d'arylène aux motifs répétitifs disulfure d'arylène compris entre 1 : 0,0001 à 1 : 0,5.
